# EUROPEAN PATENT APPLICATION

(11) **EP 4 761 034 A1**
(43) Date of publication of application: **17.06.2026**
(21) Application number: 24219201.1
(22) Date of filing: 11.12.2024
(51) Int. Cl.: H02J 3/32

(54) **ENERGY STORAGE MODULE AND AN ENERGY STORAGE SYSTEM FOR A POWER GRID**

(71) Applicant: Hitachi Energy Ltd, 8050 Zürich (CH)
(72) Inventor: Bai, Haofeng, 723 48 Västerås (SE); Zhang, Zichi, 723 58 Västerås (SE); Zhang, Hongyang, 115 24 Stockholm (SE); Soong, Theodore, Toronto, M2L2S9 (CA); Ingeström, Gunnar, 722 45 Västerås (SE)
(74) Representative: AWA Sweden AB

(57) **Abstract**

There is disclosed herein an energy storage module (10) for an energy storage system (4) connected to a power grid (2). The energy storage module comprises an energy storage unit (20) having an equivalent capacitance (22). The energy storage unit has an internal resistance (24). The energy storage module further comprises a bypass circuit (30) connected in parallel to the energy storage unit. The bypass circuit comprises a bypass switch (32) and a current limiting device (34) connected in series. A resistance of the current limiting device is less than 500 % of the internal resistance of the energy storage unit. There are also disclosed herein an energy storage system and a power grid system.

## Description

### Technical field

The present disclosure relates to an energy storage module for an energy storage system connected to a power grid. The present disclosure further relates to an energy storage system and a power grid system.

### Background

With the growing use of intermittent renewable energy sources such as solar energy and wind energy, there is a growing demand for energy storage systems. Energy storage modules are often designed with a plurality of energy storage strings connected in parallel and where each energy storage string has a plurality of energy storage modules connected in series to achieve the desired current rating and voltage rating.

When a fault occurs in an energy storage module, it can disrupt the operation of the entire energy storage system and potentially cause system-wide malfunctions. To improve the availability and reliability of the energy storage system, bypass switches are incorporated into the design. These switches allow faulty energy storage modules to be bypassed, ensuring the continued operation of the system.

In conventional energy storage modules, different methods of discharging the energy of an energy storage module have been proposed to allow bypass of a faulty energy storage module. This reduces the current stress of the energy storage during the bypassing process, but it is time consuming and introduces design complexity.

Therefore, there is a need for a simpler bypass circuit design for energy storage modules that can bypass faulty modules more quickly, improving system efficiency and reliability.

### Summary

It is therefore an object of the present disclosure to provide an energy storage module for an energy storage system connected to a power grid, that alleviates at least part of the above-mentioned drawbacks. It is for example an object of the present disclosure to provide an energy storage module with a less complex design. Further, it is an object of the present disclosure to provide a bypass of an energy storage module that is quick and reliable, thereby improving the energy storage system efficiency and reliability. Further objects of the present disclosure are to provide an energy storage system and a power grid system comprising said energy storage module.

According to a first aspect of the present disclosure, an energy storage module for an energy storage system connected to a power grid is provided. The energy storage module comprises an energy storage unit having an equivalent capacitance. The energy storage unit has an internal resistance. The energy storage module further comprises a bypass circuit connected in parallel to the energy storage unit. The bypass circuit comprises a bypass switch and a current limiting device connected in series. A resistance of the current limiting device is less than 500 % of the internal resistance of the energy storage unit.

According to a second aspect of the present disclosure, an energy storage system connected to a power grid is provided. The energy storage system comprises a plurality of strings connected in parallel. Each string comprises a plurality of serially connected energy storage modules according to the first aspect.

According to a third aspect of the present disclosure, a power grid system comprising an energy storage system according to the second aspect is provided.

If a fault, such as a short circuit fault, occurs in an energy storage module and the fault is not isolated or mitigated, this fault may start to propagate and affect the energy storage system and result in degraded performance or even in downtime of the energy storage system. Therefore, it is of importance that the energy storage module is bypassed. With the energy storage module of the present disclosure, a faulty energy storage module can be bypassed by closing the bypass switch. When the bypass switch is closed, the energy of the energy storage unit is discharged quickly, and the string current may be routed through the bypass circuit. This provides a quicker way of bypassing the energy storage module compared to conventional methods, where a parallel branch with a resistor having a high resistance is used to dissipate the energy, and thereafter a second parallel branch is used to bypass the energy storage module.

During normal operation of the energy storage module, the current flows through the energy storage unit. If there is a fault in the energy storage module, the bypass switch will be closed and "activate" the bypass circuit. The fault current will then be dissipated by the current limiting device and by the internal resistance of the energy storage unit. This results in the energy storage unit of the faulty energy storage module being bypassed and the energy storage system can retain its normal operation, but the current will flow through the bypass circuit in the faulty energy storage module.

When bypassed, the energy stored in the energy storage unit which has not been discharged will be converted to heat. The magnitude of the resistance of the current limiting device will determine the distribution of heat between the internal resistance of the energy storage unit and the current limiting device of the bypass circuit. A higher resistance of the current limiting device results in that more heat is dissipated in the bypass circuit. With a current limiting device having a resistance less than 500% of the internal resistance of the energy storage unit, the discharge of the energy of the energy storage unit is divided relatively evenly between the energy storage unit and the bypass circuit compared to conventional current limiting devices where the aim is to discharge the energy storage unit before bypass and therefore the resistor of the bypass circuit has a much higher resistance. As an example, if the resistance of the current limiting device and the internal resistance of the energy storage unit are of the same size, the energy stored in the energy storage unit will be divided such that half of the current is converted to heat in the energy storage unit, and half of the energy is converted to heat in the current limiting device. How the energy is divided can be calculated through the voltage division rule which is based on Ohm's law and Kirchhoff's current law. Thereby, the energy storage module and the current limiting device can be designed based on how much of the energy that safely can be dissipated in the energy storage unit. For example, by designing the current limiting device with a resistance that is half of the internal resistance of the energy storage unit, only a third of the energy will be dissipated in the energy storage unit, and two thirds of the energy will be dissipated in the current limiting device. The currents flowing through the current limiting device and the energy storage unit are dependent on their portion of the total resistance and the branch with the lower resistance will handle a larger portion of the current.

Todays and future energy storage units are able to withstand higher discharge currents, thereby allowing for designs where higher amplitude of the fault currents are discharged inside the energy storage unit. Thus, the current limiting device can be designed with lower resistance and the energy storage unit can be bypassed without a full discharge. This allows for a faster discharging speed as not all energy is dissipated before bypassing. Examples of energy storage units are capacitors and supercapacitors.

A further advantage with the current limiting device having a resistance in a similar size as the internal resistance of the energy storage unit is that the bypass circuit only introduces a similar amount of losses when the energy storage unit is bypassed as when current flows through the energy storage unit during normal operation. This allows the bypass circuit to have both the bypass path and the current limiting device in the same branch. In conventional bypass circuits, these two functions are divided into two different branches, a first branch with the current limiting device with a high resistance which is used for discharging the energy storage unit, and a second branch which is used for bypassing the energy storage unit. With the current limiting device having lower resistance, the bypass path can be through the current limiting device without substantially increasing the losses. This allows for a more compact energy storage module with less components. In other words, the bypass circuit may be a single bypass circuit. With a single bypass circuit is herein meant that one and only one circuit or branch is used in the bypass function, i.e., the full bypass circuit is one path that provides both the bypass and the discharge function. Expressed differently, the energy storage module includes only one (or a single) bypass circuit.

The equivalent capacitance of the energy storage unit corresponds to a capacitance value that represents the sum of all capacitance values in that branch. For example, there may be a plurality of capacitors connected in series and/or in parallel in one energy storage units, and their aggregated capacitance is represented by the equivalent capacitance.

To achieve a desired voltage rating and/or capacity rating, energy storage modules are often connected in series and/or in parallel with each other when designing an energy storage system. For example, the energy storage system includes a plurality of energy storage strings connected in parallel to obtain the desired capacity rating, and by adding energy storage modules in series within these energy storage strings the desired voltage rating may be achieved.

The present disclosure relates to an energy storage module and an energy storage system typically used in power grids and that are designed to withstand the currents and voltages used in power grids, such as a transmission power grid. A power grid refers to the interconnected electrical network that transmits and distributes electricity from centralized generation sources (e.g., power plants, renewable energy farms) to end users, typically covering large geographical areas and involving high-voltage transmission lines, substations, and distribution systems.

The energy storage module may for example be used in any energy storage system or in an energy storage system of DC/AC converter system.

The resistance of the current limiting device may be less than 200 % of the internal resistance of the energy storage unit.

With the resistance of the current limiting device being closer to the internal resistance of the energy storage unit, the losses for the energy storage system will be lower when the bypass circuit is used, and the energy storage unit is bypassed. From the perspective of reducing power losses, when bypassing the energy storage unit, the bypass circuit preferably has as low resistance as possible. However, fault current dissipation and heat conversion in the energy storage unit may also be taken into consideration when designing the current limiting device.

The current limiting device may be a busbar. An effective length and/or a cross-section area of the busbar may be adapted to achieve the resistance of the current limiting device. The resistance of the busbar may be increased by increasing the effective length or by reducing the cross-section area of the busbar. As an example, the busbar may have a sawtooth pattern, or a folded path. The busbar may be cut to increase the effective length and to reduce the cross-section area.

The busbar may be made of a material configured to withstand a discharge current of the energy storage unit and a continuous operating current.

Another way of increasing the resistance of the busbar is by the choice of material. The material of the busbar may be determined based on the amount of energy in the energy storage unit. Higher amounts of energy in the energy storage unit results in more energy converted into heat and therefore the busbar should withstand higher temperatures without melting. The busbar may as an example be made of a resistive alloy. The resistive alloy may have a melting temperature above 1300° C. The busbar may for example be made of steel. Steel is an example of material that is able to withstand the discharge from the energy storage unit when the energy storage unit is bypassed, as well as providing the continuous operating current, which is the normal current during operation.

The bypass switch may be a mechanical switch and/or power electronic switch.

The bypass switch may be configured to close if a fault occurs in the energy storage module. This may be done through current sensing devices that are connected to the bypass switch. When the bypass switch closes, the bypass circuit is activated, and the current will start flowing through the bypass circuit. This may be automated or performed by a control unit which sends a signal to the bypass switch to close.

The energy storage system according to the second aspect may further comprise an AC/DC converter connecting the energy storage system to the power grid.

The AC/DC converter may be used to convert power between the energy storage system and the power grid. The AC/DC converter converts AC to DC for charging the energy storage system from the power grid, and converts DC to AC to discharge the stored energy back to the power grid. This ensures compatibility between the AC grid and the DC-based energy storage system, enabling efficient energy transfer and grid integration.

Effects and features of the second aspect and the third aspect may be largely analogous to those described above in connection with the first aspect. Embodiments mentioned in relation to the first aspect may be at least largely compatible with the second aspect and the third aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular parts of the energy storage module, energy storage system and power grid system described herein. It is also to be understood that the terminology used herein is for the purpose of describing particular embodiments only, and it is not intended to be limiting.

### Brief description of the drawings

The above and other aspects of the present disclosure will now be described in more detail, with reference to the appended figures, wherein:
- Fig. 1: schematically shows an overview of a power grid system.
- Fig. 2: schematically shows an energy storage module.
- Fig. 3: schematically shows an energy storage module with a busbar as current limiting device.

### Detailed description

The present disclosure is described in the following by way of a number of illustrative examples. It will be appreciated that these examples are provided for illustration and explanation only and are not intended to be limiting on the scope of the disclosure.

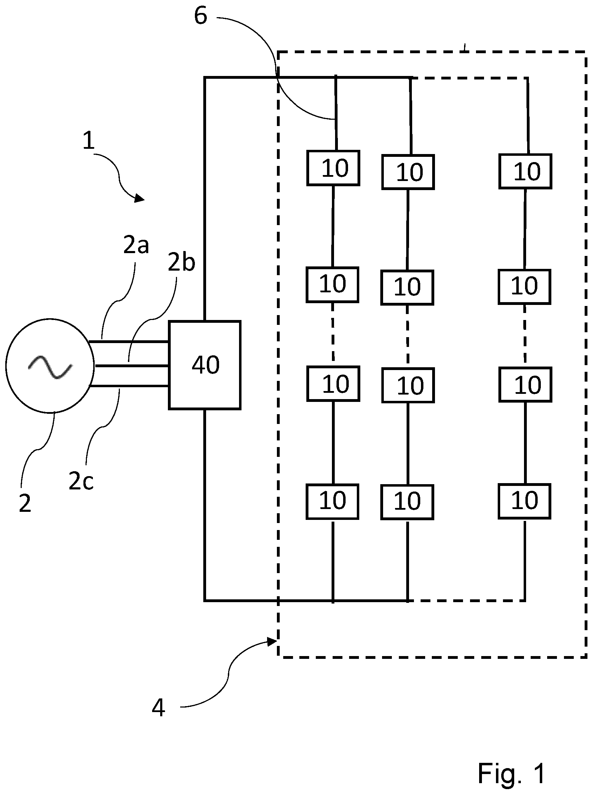

Fig. 1 is an illustration of a power grid system 1. The power grid system comprises an energy storage system 4 that is connected to a power grid 2. The power grid 2 comprises three phases 2a, 2b, 2c. The energy storage system 4 comprises an AC/DC converter 40 that connects the energy storage system 4 to the power grid 2. The AC/DC converter 40 converts AC to DC to charge the energy storage system 4 with energy from the power grid 2, and converts DC to AC to discharge the energy stored in the energy storage system 4 back to the power grid 2.

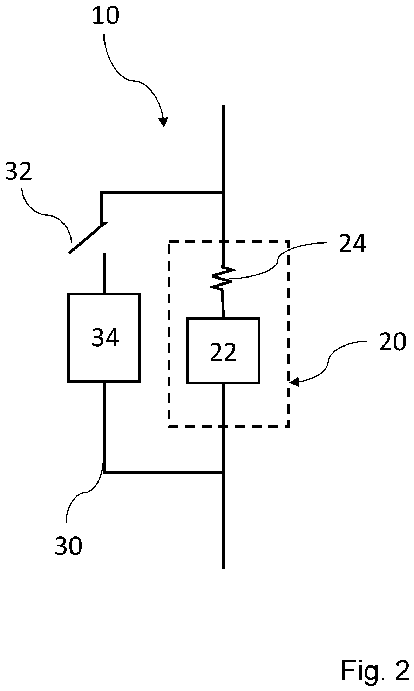

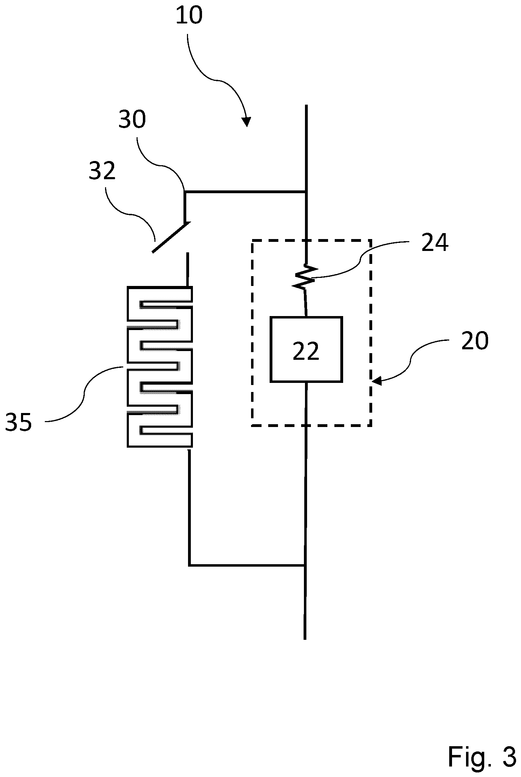

The energy storage system 4 further comprises a plurality of strings 6 connected in parallel. Each string 6 comprises a plurality of serially connected energy storage modules 10 that will be further described in connection to Figs. 2 and 3. The number of strings 6 and energy storage modules 10 in parallel in each string 6 is determined based on a desired voltage rating and/or capacity rating of the energy storage system 4. A desired capacity rating may be achieved by connecting a certain number of strings 6 in parallel, and a desired voltage rating may be achieved through the connection in series of a certain number of energy storage modules in the strings 6. As can be understood from the dotted lines between the energy storage modules 10 and between the strings 6, any number of strings 6 and energy storage modules 10 may be used in the energy storage system 4, depending on the desired application (i.e., desired capacity rating and desired voltage rating).

In Fig. 2 an exemplifying embodiment of the energy storage module 10 is illustrated. The energy storage module 10 can be used for example in an energy storage system 4 as described in Fig. 1.

The energy storage module 10 comprises an energy storage unit 20 having an equivalent capacitance 22 (such as e.g. the capacitance of a capacitor). The equivalent capacitance 22 of the energy storage unit 20 may be a single capacitance value that represents all capacitance values in that branch. In the same way as the energy storage system is provided with strings 6 and energy storage modules 4 to achieve a desired capacity rating/voltage rating, the energy storage unit may be provided with a plurality of capacitors (not shown) in series and parallel in one energy storage unit 20 which resulting capacitance is represented by the equivalent capacitance 22.

The energy storage unit 20 further has an internal resistance 24. The internal resistance 24 may be inherent of the energy storage unit 20. In capacitors, the resistance may be due to for example the resistive properties of the dielectric material and conducting plates. The internal resistance 24 determines how large losses in the energy storage unit 20 will be when a current travels through the energy storage unit 20.

The energy storage module 10 further comprises a bypass circuit 30 connected in parallel to the energy storage unit 20. The bypass circuit 30 comprises a bypass switch 32 and a current limiting device 34 connected in series.

The bypass switch 32 is open during normal operation of the energy storage system 4. The bypass switch 32 is configured to withstand the discharge current during a fault and to withstand the operation current during normal operation. Pyro switches and press-pack thyristors are examples of switches that may be used as bypass switch 32. Pyro switches and press-pack thyristors are able to handle high currents and voltage while still being able to quickly interrupt current flow.

The bypass switch 32 may be configured to close if a fault occurs in the energy storage module 10. For example, if a short-circuit fault occurs in the energy storage module 10, the bypass switch 32 will be used to bypass the energy storage unit 20. Some methods for determining when to close the bypass switch 32 and activate the bypass circuit rely for example on the use of current sensing devices (not shown) and on automatically closing the bypass switch 32 if the sensed current exceeds a set value. Alternatively, activation of the bypass circuit may be performed by a control unit (not shown).

A resistance of the current limiting device 34 may be less than 500 % of the internal resistance 24 of the energy storage unit 20. Preferably, the resistance of the current limiting device 34 may be less than 200 % of the internal resistance 24 of the energy storage unit 20.

During normal operation of the energy storage module 10, the current flows through the energy storage unit 20 and the bypass switch 32 is open. If there is a fault in the energy storage module 10, the bypass switch 32 will close and activate the bypass circuit 30. The fault current will be dissipated by the current limiting device 34 and by the internal resistance 24 of the energy storage unit 20. Thereafter the bypass switch 32 will be kept closed and the energy storage unit 20 will be bypassed and the energy storage system 4 will retain its normal operation. After the bypass switch 32 has been closed, the energy storage unit 20 of the faulty energy storage module 10 will be bypassed and the current will flow through the bypass circuit 30.

In the provided energy storage module 10, one single bypass circuit 30 may be used for both the discharge of the energy storage unit 20 and for bypassing the energy storage unit 20. This is due to the current limiting device 34 having a resistance of a similar size as the internal resistance 24 of the energy storage unit 20. Therefore, the bypass circuit 30 only introduces losses that are similar to the losses of the energy storage unit 20. If compared to conventional bypass circuits, the resistance of the current limiting device is higher and therefore would introduce too large losses to allow the bypass circuit with the current limiting device to be used as bypass path.

It is of importance that a faulty energy storage module is not allowed to affect the remaining energy storage system 4 to avoid degraded performance of the energy storage system. Therefore, the faulty energy storage module should be isolated as quick as possible. Conventional methods propose a soft discharge where a resistor with high resistance is used to discharge the energy storage unit if a fault occurs, and thereafter the energy storage unit is bypassed by a further bypass branch.

With an energy storage module 10 in accordance with the embodiments described herein, the bypass switch 32 of the faulty energy storage module can be closed to directly bypass the energy storage unit 20 with the bypass circuit 30. In the present embodiments, the energy storage unit 20 does not need to be discharged before being bypassed, which results in a larger short-circuit current in both the energy storage unit 20 and the current limiting device 34 of the bypass circuit 30. However, today's energy storage units are able to withstand higher discharge currents, thereby allowing for designs in which larger portions of the currents can be discharged inside the energy storage unit 20. Thus, the current limiting device 34 can be designed with a lower resistance. Two of the technical benefits of this approach are a quicker bypass speed and a more compact design.

The magnitude of the resistance of the current limiting device 34 determines how much of the fault current that is discharged in the current limiting device 34 and how much of the fault current that is discharged in the energy storage unit 20. A higher resistance results in that less current will pass through the bypass circuit 30. With a current limiting device 34 having a resistance less than 500% of the internal resistance 24 of the energy storage unit 20, the fault current is divided relatively evenly between the two branches compared to conventional current limiting devices in which the aim is to first discharge the energy storage unit. As an example, if the resistance of the current limiting device 34 and the internal resistance 24 of the energy storage unit 20 are of the same size, the fault current discharged will be split such that half of the current is converted to heat in the energy storage unit 20, and half of the fault current is converted to heat in the current limiting device 34. How the current is split can be calculated through the current division rule which is based on Ohm's law and Kirchhoff's current law. Thereby, the energy storage module 10 can be designed based on how much fault current that safely can be dissipated in the energy storage unit 20.

In Fig. 3, another exemplifying embodiment of the energy storage module 10 is illustrated. The energy storage module 10 can be used in for example an energy storage system 4 as described in connection to Fig. 1.

The energy storage module 10 comprises an energy storage unit 20 having an equivalent capacitance 22. The energy storage unit 20 further has an internal resistance 24. The energy storage unit 20 has already been described in connection to Fig. 2 and all details are therefore not repeated here.

The energy storage module 10 further comprises a bypass circuit 30 connected in parallel to the energy storage unit 20. The bypass circuit 30 comprises a bypass switch 32 and a current limiting device 35 connected in series. However, in Fig. 3, the current limiting device is a busbar 35. The busbar 35 has been modified to achieve the desired resistance. The resistance of the busbar 35 can be modified by altering its effective length and/or cross-section area. The resistance of the busbar 35 may be increased by increasing the effective length or by reducing the cross-section area of the busbar 35.

For example, the busbar 35 may be cut such that the effective length that the electrons have to travel increases while the total length of the busbar 35 remains the same. Fig. 3 illustrates that a folded pattern may be used. In this example, the busbar 35 has been cut into a plurality of U-turns that zigzags forward along the length of the busbar 35. However, other types of patterns may also be used to increase the effective length of the busbar 35 while the actual length is the same. Other patterns may be a sawtooth pattern or a serpentine pattern. Further, the turns in the busbar 35 may also increase the resistance due to increased skin effect.

Another way of increasing the resistance of the busbar 35 is by the choice of material. The busbar may for example be made of steel or copper, or an alloy including copper. Steel is an example of a material that is able to withstand the discharge from the energy storage unit 20 when the energy storage unit 20 is bypassed, as well as the continuous operating current, which is the normal current during operation.

While the present disclosure is susceptible to various modifications and alternative forms, specific examples are shown and described in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims, including the possible combination of various elements of these specific examples.

## Claims

1. An energy storage module (10) for an energy storage system (4) connected to a power grid (2), the energy storage module comprising:
an energy storage unit (20) having an equivalent capacitance (22), wherein the energy storage unit has an internal resistance (24), and
a bypass circuit (30) connected in parallel to the energy storage unit,
wherein the bypass circuit comprises a bypass switch (32) and a current limiting device (34) connected in series, and
wherein a resistance of the current limiting device is less than 500 % of the internal resistance of the energy storage unit.

2. The energy storage module according to claim 1, wherein the resistance of the current limiting device is less than 200 % of the internal resistance of the energy storage unit.

3. The energy storage module according to any one of the preceding claims, wherein the current limiting device is a busbar (35).

4. The energy storage module according to claim 3, wherein an effective length and/or a cross-section area of the busbar is adapted to achieve the resistance of the current limiting device.

5. The energy storage module according to claim 3 or 4, wherein the busbar is made of a material configured to withstand a discharge current of the energy storage unit and a continuous operating current.

6. The energy storage module according to any one of claims 3 to 5, wherein the busbar is made of steel.

7. The energy storage module according to any one of the preceding claims, wherein the bypass circuit is a single bypass circuit.

8. The energy storage module according to any one of the preceding claims, wherein the bypass switch is a mechanical switch and/or a power electronic switch.

9. The energy storage module according to any one of the preceding claims, wherein the bypass switch is configured to close if a fault occurs in the energy storage module.

10. An energy storage system (4) connected to a power grid (2), the energy storage system comprising a plurality of strings (6) connected in parallel, wherein each string comprises a plurality of serially connected energy storage modules (10) according to any one of the preceding claims.

11. The energy storage system according to claim 10, further comprising an AC/DC converter (40) connecting the energy storage system to the power grid.

12. A power grid system (1) comprising an energy storage system according to claim 10 or 11.
